# EUROPÄISCHE PATENTSCHRIFT

(11) **EP 3 012 663 B1**
(45) Veröffentlichungstag und Bekanntmachung des Hinweises auf die Patenterteilung: **28.08.2019**
(21) Anmeldenummer: 15188150.5
(22) Anmeldetag: 02.10.2015
(51) Int. Cl.: G01S 17/42, G01S 17/87, G01S 17/93, G01S 7/497

(54) **SICHERHEITSSYSTEM ZUR ABSICHERUNG DER UMGEBUNG EINES OBJEKTS**
SECURITY SYSTEM FOR SECURING THE SURROUNDINGS OF AN OBJECT
SYSTEME DE SECURITE DESTINE A SECURISER L'ENVIRONNEMENT D'UN OBJET

(30) Priorität: 20.10.2014 DE 102014115260
(43) Veröffentlichungstag der Anmeldung: 27.04.2016
(73) Patentinhaber: SICK AG, 79183 Waldkirch (DE)
(72) Erfinder: Hammes, Markus, Dr., 79117 Freiburg (DE)

(56) Entgegenhaltungen:
- EP-A1- 2 722 684
- DE-A1- 4 409 760
- DE-A1- 10 234 730
- US-B2- 6 657 762

## Beschreibung

Die Erfindung betrifft ein Sicherheitssystem zur Absicherung der Umgebung wenigstens eines Objekts sowie ein Verfahren zur Absicherung der Umgebung.

Zur Überwachung von Arbeitsbereichen werden häufig Sicherheitslaserscanner eingesetzt, wie sie beispielsweise aus DE 43 40 756 A1 bekannt sind. Ein von einem Laser erzeugter Lichtstrahl wird über eine Lichtablenkeinheit in eine Scanebene gelenkt und dort von einem gegebenenfalls vorhandenen Gegenstand remittiert. Das remittierte Licht gelangt wieder zurück zum Laserscanner und wird dort von einem Empfänger detektiert. Die Lichtablenkeinheit ist in der Regel schwenkbar bzw. drehbar ausgestaltet, so dass der von dem Laser erzeugte Lichtstrahl eine durch die Schwenk- bzw. Drehbewegung erzeugte Scanebene periodisch überstreicht. Wird ein vom Gegenstand remittiertes Lichtsignal aus der Scanebene empfangen, so kann aus der Winkelstellung der Ablenkeinheit auf die Winkellage des Gegenstands im Schutzbereich geschlossen werden. Wird zusätzlich zum Beispiel die Laufzeit von einzelnen Laserlichtpulsen vom Aussenden bis zum Empfang einer Reflexion an dem Gegenstand überwacht, kann aus der Laufzeit unter Verwendung der Lichtgeschwindigkeit zusätzlich auf die Entfernung des Gegenstands vom Laserscanner geschlossen werden. Mit den Winkel- und Entfernungsangaben lässt sich der Ort eines Gegenstands ermitteln und zum Beispiel zweidimensionale Schutzfelder innerhalb der Scanebene vollständig überwachen. Befindet sich im Schutzfeld ein unzulässiger Gegenstand, so kann von der Auswerteeinheit des Scanners ein entsprechendes Warn- oder Stoppsignal ausgegeben werden.

Derartige Systeme werden zum Beispiel an Maschinen eingesetzt, bei denen ein Gefahrenbereich überwacht werden muss, der beim Betrieb der Maschine von einer Bedienperson nicht betreten werden darf. Wird mit Hilfe des Laserscanners die Anwesenheit eines unzulässigen Gegenstands - also zum Beispiel ein Bein einer Bedienperson - im Gefahrenbereich festgestellt, wird ein Nothalt der Maschine bewirkt. Derartige Scansysteme als Sicherheitssensoren müssen zuverlässig arbeiten und deshalb hohe Sicherheitsanforderungen, beispielsweise die Norm EN13849 für Maschinensicherheit und die Gerätenorm EN61496 für berührungslos wirkende Schutzeinrichtungen (BWS), erfüllen.

Zur Erfüllung dieser Sicherheitsnormen sind eine Reihe von Maßnahmen zu treffen, wie z.B. sichere elektronische Auswertung durch redundante, diversitäre Elektronik, Funktionsüberwachung durch beispielsweise Überwachung der Verschmutzung optischer Bauteile, insbesondere einer Frontscheibe und/oder Vorsehen von einzelnen Referenzzielen mit definierten Reflexionsgraden, die unter den entsprechenden Scanwinkeln erkannt werden müssen.

Trotz dieser Maßnahmen sind in verschiedenen Applikationen Laserscanner auf ein externes Referenzziel angewiesen. Denn z.B. im Gegensatz zu Lichtgittern gibt es bei der Detektion mit einem Laserscanner nämlich keine "Erwartungshaltung", also ein definiertes Signal, dass den sicheren Zustand signalisiert. Bei Laserscannern wird davon ausgegangen, dass bei Abwesenheit eines optischen Echos kein Gegenstand im Taststrahl anwesend ist und diese Schlussfolgerung ist gerade bei sicherheitstechnischen Anwendungen manchmal problematisch. So kann ein optisches Echo zum Beispiel auch durch Verschmutzung der Frontscheibe, durch Nebel oder dunklen Staub oder auch durch die Oberflächeneigenschaften und Geometrie des angetasteten Gegenstands unterdrückt werden.

In Applikationen, in denen solche Komplikationen berücksichtigt werden müssen, greift man unter anderem auf ein externes Referenzziel zurück, mit dem der Scanner seine Detektionsfähigkeit überprüfen und gegebenenfalls sicherheitsgerichtet abschalten kann. Alternativ können solche Referenzziele auch dafür genutzt werden, definierte optische Bedingungen in einer ansonsten völlig variablen Szene zu schaffen, um so die Grundlage für eine sichere Detektion zu erhalten. Ein Beispiel ist die genannte Kollisionsschutzfunktion des Sicherheitslaserscanners. Hier sollen neben Personen auch Flurförderfahrzeuge, sogenannte FTS ("fahrerlose Transportsysteme"), sicher detektiert werden. Da man in diesem Fall nicht von den optischen Eigenschaften von Personen und Textilien ausgehen kann (Remission größer als 2%, diffuse Streuung der Oberfläche), sondern mit einem sehr variablen Umfeld konfrontiert ist, müssen an den beteiligten Fahrzeugen zusätzliche Referenzziele angebracht werden. Es muss also neben der oben beschriebenen Funktionstüchtigkeit des Scanners selbst sichergestellt sein, dass das andere Fahrzeug in dem Umfeld auch tatsächlich erkannt wird. Dies stellen die externen Referenzziele an jedem Fahrzeug sicher.

Diese Maßnahme ist wirksam, aber erstens mitunter aufwändig und zweitens sicherheitstechnisch nicht unbedenklich. Es gibt eine Reihe von Problemen bzw. Besonderheiten mit externen Referenzzielen, die beachtet und im Sicherheitskonzept berücksichtigt werden müssen, nämlich:
- sie müssen zusätzlich angebracht werden;
- sie stören die Designfreiheit der Fahrzeughersteller;
- sie müssen immer sichtbar sein, d.h. sie dürfen auch nicht durch eine zu transportierende Ladung verdeckt werden;
- sie verdrecken und werden dadurch schlechter sichtbar, was die Sicherheit in unzulässiger Weise reduzieren kann;
- sie sind meist nur aufgeklebt und können daher im Laufe der Zeit abfallen, wenn der Klebeauftrag nachlässt.

Ein Sicherheitskonzept muss alle diese Dinge berücksichtigen und es müssen Maßnahmen ergriffen oder festgelegt werden, damit diese Schwierigkeiten nicht zu Sicherheitsproblemen führen können. Das ist entsprechend aufwändig und kostenträchtig.

Gleiche oder ähnliche Betrachtungen gelten auch für stationäre Anwendungen, wenn z.B. mit derartigen Systemen ein Kreuzungsbereich im Outdoorbereich, z.B. in einem Containerterminal, abgesichert werden soll.

Aus der DE 44 09 760 A1 ist ein fahrerloses Transportsystem mit mehreren fahrerlosen Transportfahrzeugen bekannt. Dabei weist jedes Fahrzeug einen Laserscanner auf, der letztendlich mehrere Funktionen erfüllt. Dazu weist ein solcher Laserscanner neben dem Empfänger, der die Reflektionen des eigenen Lichts empfängt, auf der Rückseite des Ablenkspiegels einen zweiten Empfänger auf, der Licht empfangen kann, das aus genau der entgegengesetzten Richtung als das abgestrahlte Licht kommt. Wenn die Scanner alle winkelsynchron rotieren, kann ein Scanner "nach Vorne" zur Hinderniserkennung, Navigation und Barcodelesung dienen und durch die "Sicht" nach hinten und das synchrone Rotieren immer mit einem der anderen Scanner unidirektional kommunizieren.

Aus der EP 2 722 684 A1 ist ein Laserscanner bekannt, der für den Outdoor Einsatz so ausgebildet ist, dass auf externe Referenzziele verzichtet werden kann. Das geschieht dadurch, dass die Polarisation des zurückreflektierten Lichts in geeigneter Weise analysiert wird.

In der DE 102 34 730 A1 ist ein Gabelstapler beschrieben, der neben einem GPS System zur Navigation auch einen Laserscanner aufweist. Der Laserscanner erfasst permanent die Umgebung. Die Daten des Laserscanners und des GPS werden miteinander abgeglichen.

Ausgehend von diesem Stand der Technik ist es Aufgabe der Erfindung, ein Sicherheitssystem bereitzustellen, mit dem die genannten Nachteile vermieden werden können.

Diese Aufgabe wird gelöst durch ein Sicherheitssystem mit den Merkmalen des Anspruchs 1 und ein Verfahren mit den Merkmalen des Anspruchs 8.

Das erfindungsgemäße Sicherheitssystem zur Absicherung der Umgebung wenigstens eines Objekts weist einen ersten Sicherheitslaserscanner, dem ein erstes definiertes Referenzziel zugeordnet ist, und einen zweiten Sicherheitslaserscanner, dem ein zweites definiertes Referenzziel zugeordnet ist, auf. Jeder Sicherheitslaserscanner umfasst:
- einen Lichtsender,
- eine Lichtablenkeinheit zur periodischen Ablenkung des Lichtes in eine Scanebene,
- einen Empfänger zur Bereitstellung von Empfangssignalen in Abhängigkeit von an im Sichtbereich des Scanners vorhandenen Gegenständen remittiertem Licht
- und eine Auswerteeinheit zur Auswertung der Empfangssignale bezüglich Winkel und Abstand des Gegenstands und zur Bereitstellung eines Sicherheitssignals.
Erfindungsgemäß sind die Scanebenen beider Scanner koplanar ausgerichtet und der erste Scanner bildet das zweite Referenzziel und der zweite Scanner das erste Referenzziel.

Die bisher üblichen Referenzziele werden also durch den Scanner selbst ersetzt, so dass sie im neuen Sicherheitssystem schlicht entfallen. Einige der vorgenannten Probleme sind damit automatisch gelöst; zum Beispiel die Beeinträchtigung der Sichtbarkeit durch Beladung, Schmutz oder dergleichen. Ein Scanner wird vom anderen baugleichen Scanner immer zu sehen sein, denn wenn die Sicht verdeckt wäre würde der verdeckte Scanner selbst ein Sicherheitssignal ausgeben, da er ja nicht funktionstüchtig ist.

Ein zusätzliches Anbringen von Referenzzielen entfällt und die Designfreiheit der Fahrzeughersteller ist gegeben. Sie müssen außer dem Scanner nichts weiter vorsehen und in sicherheitstechnischer Hinsicht auf nichts Weiteres achten.

Es hat sich nämlich überraschenderweise herausgestellt, dass ein Scanner für einen baugleichen anderen Scanner ein gutes Referenzziel darstellt, denn ein Scanner hat immer an irgendeiner Stelle, also z.B. am äußeren Gehäuse oder an irgendeiner im Inneren gelegenen Komponente, die aufgrund der gleichen Wellenlänge des Lichts für den Scanner durch eine Frontscheibe hindurch sichtbar ist, einen hohen Reflexionsgrad.

Dadurch, dass der eine Scanner durch den als Referenzziel fungierenden anderen Scanner immer genug Licht für eine Detektion empfängt, kann unabhängig von den Eigenschaften der Objekte (Form, Lack, Glanz, etc.) die Detektion sichergestellt und so eine Funktionsfähigkeit des Sicherheitssystems, z.B. bei Einsatz in fahrerlosen Transportsystemen (FTS) als Kollisionsschutz, realisiert werden.

Das erfindungsgemäße System arbeitet also mit Scannern, die sich quasi gegenseitig "sehen", und also der Lichtstrahl des einen Scanners in den anderen Scanner leuchtet. Deshalb sendet der Lichtsender eines Scanners vorteilhafterweise gepulstes Licht aus und die Entfernung zum Gegenstand wird über die Pulslaufzeit berechnet. Wie sich herausgestellt hat kommt dann, also bei Scannern die nach dem TOF (Time-Of-Flight) Prinzip arbeiten, eine gegenseitige Blendung fast nie vor. Es tritt in der Realität überraschenderweise äußerst selten auf, dass der Lichtpuls eines Scanners zu genau dem Zeitpunkt auf den anderen Scanner trifft, wenn bei dem anderen Scanner die Ablenkeinheit gerade so steht, dass der Lichtpuls in die Empfangsoptik gelangt. Selbst wenn das einmal auftreten sollte ist es noch kein Problem, denn ein Scanner schaltet bei einmaligem Überblenden noch nicht ab, sondern zumeist prüft der Scanner, ob im folgenden Scan dieselbe Überblendung auftritt.

In Weiterbildung der Erfindung kann der Scanner anhand des empfangenen reflektierten Lichts erkennen, ob es sich bei dem reflektierten Licht um eine charakteristische Reflexion an einem anderen Scanner handelt oder nicht.

Dies ist in mehrerer Hinsicht vorteilhaft.

In einer Anwendung des erfindungsgemäßen Systems als Kollisionsschutz an FTS kann ein Fahrzeug anhand der Reflexion erkennen, ob ein anderes Fahrzeug im Sichtfeld ist und entsprechend reagieren. Solch eine Erkennung ist unabhängig von der Szene, die in einer Werkshalle mit reflektierenden Regalen, Wänden, etc., beliebig kompliziert sein kann und von Einsatzort zu Einsatzort eine hohe Varianz aufweist. Diese Erkennung eines anderen Fahrzeugs in jeder Szene ist äußerst vorteilhaft, denn die Fahrzeuge sind mit dem neuen Sicherheitssystem in jeder Szene sofort einsetzbar. Das wäre mit bekannten Reflektoren als Referenzziele nicht möglich, da die Reflexionen von dem Reflektor nicht unbedingt von anderen starken Reflexionen, z.B. an einem metallenen Regal, unterschieden werden können. Die Reflexionen an einem Scanner haben aber einen charakteristischen Verlauf, so dass sie eindeutig erkannt werden können. So kann der Scanner im zeitlichen Verlauf ein stark moduliertes Signal sehen, das vom rotierenden Spiegel des gegenüberliegenden, angetasteten Scanners herrührt, wie weiter unten noch näher erläutert.

Dies kann aber auch sehr vorteilhaft in einer statischen Anwendung im Outdoorbereich sein. Im Outdoorbereich besteht immer das Problem der unbekannt beeinträchtigten Sichtweite durch typischerweise Nebel. Das kann zu schwerwiegenden Sicherheitsproblemen führen, wenn der Scanner keine optischen Echos mehr sieht trotz Gegenständen im Schutzbereich. Solche Probleme lassen sich auch nicht vollständig durch externe Reflektoren als Referenzziele vermeiden. Wenn der Scanner nun aber nach der Erfindung eine charakteristische Reflexion (des anderen Scanners) anhand ihres Reflexionsprofils erkennen kann, weil nämlich z.B. die oben erwähnte Modulation des Signals unabhängig vom Nebel ist, kann er über die empfangene Intensität und die Entfernung zum anderen Scanner eindeutig die Sichtweite bestimmen. Außerdem ist zwar die Intensität durch Sichtbeeinträchtigung reduziert, aber relative Intensitäten innerhalb des charakteristischen Reflexionsprofils sind davon nicht betroffen. Der Scanner kann somit eindeutig "wissen", woher die Reflexion stammt und aus der Intensität und der bekannten Entfernung sicher auf die Sichtweite schließen.

In Weiterbildung der Erfindung wird eine typische Reflexion des zweiten Scanners von Licht des ersten Scanners in einem Einlernvorgang eingelernt. Typischerweise wird in diesem Fall der Kontrast der zeitlichen Oszillation des Empfangssignals ausgewertet. Wenn der erste Scanner die typische charakteristische Reflexion eines Scanners kennt, kann der erste Scanner z.B. beurteilen, ob der andere Scanner einwandfrei erkannt wird, oder ob z.B. die Sicht getrübt ist. So können Sichttrübungen durch Staub, Nebel oder dergleichen erkannt werden und entsprechende Sicherheitsmaßnahmen, wie verringerte Geschwindigkeiten, aktiviert werden. Insgesamt bleibt das System besser einsatzfähig und hat damit eine höhere Verfügbarkeit.

Wenn die Sicherheitslaserscanner eine interne Reflektormarke aufweisen, kann die charakteristische Reflexion des Scanners verbessert und in der Intensität erhöht werden. Die interne Reflektormarke kann also nicht nur dazu dienen, den Scanner in bekannter Weise selbst zu prüfen, sondern ermöglicht auch eine bessere Sichtbarkeit und Erkennbarkeit für den anderen Scanner.

Mit Vorteil kann das erfindungsgemäße System an einem Fahrzeug, insbesondere einem fahrerlosen Transportsystem, an dem der erste Scanner angeordnet ist, und an einem zweiten Fahrzeug, an dem der zweite Scanner angeordnet ist, eingesetzt werden. Die eingangs genannten Nachteile, wie zusätzliches Anbringen von Referenzzielen; eingeschränkte Designfreiheit; eingeschränkte Sichtbarkeit durch Zuladung oder Verdrecken; sich lösender Klebeauftrag, können allesamt vermieden werden.

Das erfindungsgemäße Verfahren zur Absicherung der Umgebung eines Objekts mit einem ersten und einem zweiten Sicherheitslaserscanner umfasst die Schritte:
- Anordnen jeden Scanners an je einem Objekt jeweils auf gleicher Höhe und in gegenseitiger Sichtweite,
- Ausrichten der Scanner, so dass die Scanebenen koplanar liegen,
wobei jeder Scanner die Schritte durchführt:
- Aussenden und Ablenken eines Lichtstrahls in die Scanebene,
- Empfangen von an im Sichtbereich des Scanners vorhandenen Gegenständen remittiertem Licht und Bereitstellen von Empfangssignalen,
- Auswerten der Empfangssignale zur Bestimmung der Position eines Gegenstands in der Scanebene und in Abhängigkeit davon Bereitstellen eines Sicherheitssignals,
- Erkennen aus den Empfangssignalen, welche der erfassten Reflexionen von Reflexionen des eigenen Lichts im jeweils anderen Scanner stammen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung des Grundprinzips der Erfindung in einer ersten Ausführung (statische Anwendung);
- Fig. 2: eine Darstellung wie Fig. 1 in einer zweiten Ausführung (Anwendung an FTS);
- Fig. 3: eine schematische Darstellung eines ersten Sicherheitslaserscanners für die Erfindung in der Seitenansicht;
- Fig. 4: eine schematische Darstellung eines zweiten Scanners in der Frontansicht, bei einer bestimmten Winkelstellung der Ablenkeinheit.

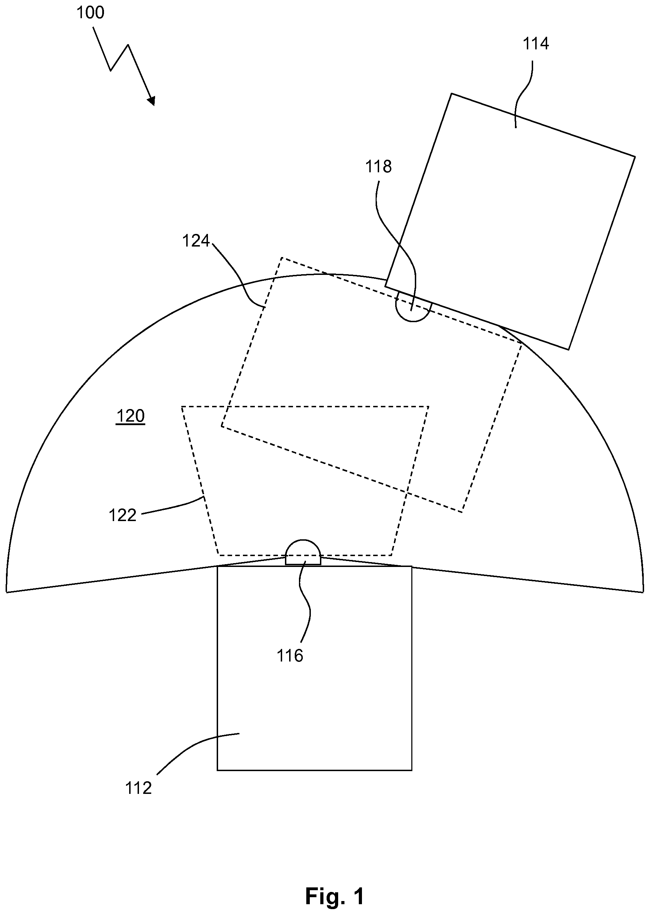

Das Grundprinzip eines ersten Ausführungsbeispiels des erfindungsgemäßen Sicherheitssystems 100 zur Absicherung der Umgebung eines Objekts 102 ist in Fig. 1 dargestellt. Das "Objekt 102" kann eine Maschine 112 und/oder 114 sein. Die Umgebung soll gegen unzulässigen Zutritt abgesichert werden, d.h. es sind beispielsweise Schutzfelder 122 und 124 definiert, die im Betrieb nicht verletzt werden dürfen. Die Schutzfelder können Gefahrenbereiche um eine Maschine herum absichern, es kann sich bei den Gefahrenbereichen aber beispielsweise auch um Kreuzungsbereiche, z.B. in einem Containerterminal, oder dergleichen handeln.

Das erfindungsgemäße System umfasst wenigstens zwei Sicherheitslaserscanner 116 und 118 (im Folgenden auch kurz "Scanner" genannt), die jeweils an einer Maschine 112 bzw. 114 oder dergleichen befestigt sind.

Die Scanner 116 und 118 dienen zur Absicherung der Umgebung. Der Scanner 116 (und analog der Scanner 118) überwacht eine vor dem Scanner gelegene Scanebene 120, die sein Sichtfeld darstellt. Die Scanebene 120 umfasst ein begrenztes Schutzfeld 122, in das zur Vermeidung von Gefahren kein Gegenstand oder eine Person eindringen darf. Zumindest muss ein Eindringen sicher erkannt werden. Befindet sich ein unzulässiger Gegenstand in dem Schutzfeld 122 bzw. 124, so wird dies von dem jeweiligen Scanner detektiert und ein Warnsignal ausgegeben und/oder die Gefahr bringende Bewegung gestoppt, z.B. ein Not-Halt.

Damit der Scanner 116 seine eigene Funktion sicherstellen kann (Sichtweite) befindet sich in seinem Sichtbereich 120 ein Referenzziel. Dieses Referenzziel wird durch den anderen Scanner 118 gebildet. Dazu müssen die beiden Scanner 116 und 118 jeweils auf gleicher Höhe angeordnet und so ausgerichtet, dass ihre Scanebenen 120 koplanar liegen. Gleiches gilt natürlich für den anderen Scanner 118, dessen Scanebene der Übersichtlichkeit wegen nicht dargestellt ist. Der scannende Lichtstrahl des ersten Scanners 116 überstreicht dann den zweiten Scanner 118 und umgekehrt. Im Scanner 118 wird der Lichtstrahl an den vom Lichtstrahl getroffenen Komponenten, wie weiter unten erläutert, reflektiert. Beim Überstreichen des Scanners 118 ergibt sich nicht nur eine hohe Reflexion an wenigstens einer der Komponenten des Scanners 118, sondern zusätzlich ein charakteristisches Reflexionsprofil. Dies kann der Scanner 116 erkennen und "weiß" dann, dass die Reflexion tatsächlich von dem Scanner 118 stammt. Der Scanner 118 wird also gesehen und die Sichtweite ist ausreichend.

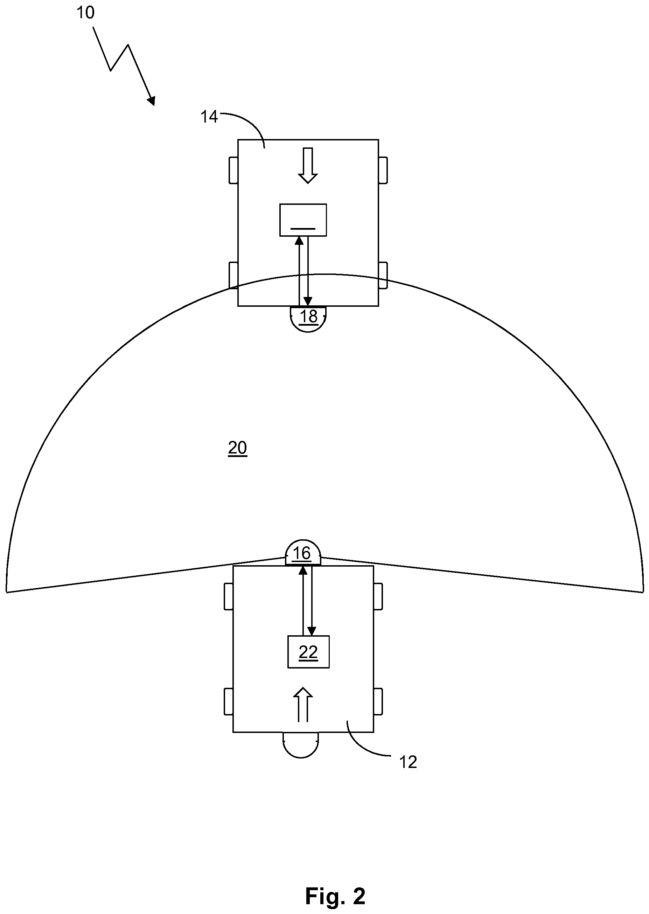

Fig. 2 zeigt ein anderes Beispiel des erfindungsgemäßen Sicherheitssystems. Hier soll die Umgebung eines Fahrzeugs 12 bzw. 14, insbesondere fahrerlosen Transportsystems (FTS), abgesichert werden. Das System 10 umfasst wenigstens zwei Sicherheitslaserscanner 16 und 18, die jeweils an einem Fahrzeug 12 bzw. 14 befestigt sind.

Die Scanner 16 und 18 dienen zur Absicherung der Umgebung des jeweiligen Fahrzeugs 12 bzw. 14. Der Scanner 16 bzw. 18 überwacht eine vor dem FTS gelegene Scanebene 20, die ein begrenztes, nicht dargestelltes Schutzfeld umfasst, in das während der Fahrt zur Vermeidung von Zusammenstößen das andere Fahrzeug oder auch eine Person nicht eindringen darf. Befindet sich ein unzulässiger Gegenstand in dem Schutzfeld, so wird dies von dem Scanner detektiert und ein Warnsignal ausgegeben und/oder die Gefahr bringende Bewegung gestoppt, z.B. eine Notbremsung und/oder Ausweichmanöver über die Fahrzeugsteuerung eingeleitet.

In gleicher Weise wie im vorherigen Beispiel sind die beiden Scanner 16 und 18 an den jeweiligen FTS 12 bzw. 14 jeweils auf gleicher Höhe über dem Boden angeordnet und so ausgerichtet, dass ihre Scanebenen 20 koplanar liegen. Erkennt der Scanner 16 den anderen Scanner 18 kann er rechtzeitig Informationen (Sicherheitssignale) an die Fahrzeugsteuerung 22 geben und die entsprechende Sicherheitsmaßnahmen, wie Not-Halt, Bremsen oder Ausweichen, einleiten.

Auch hier kann jeder Scanner 16 bzw. 18 vorteilhaft aus seinen Empfangssignalen erkennen, welche der erfassten Reflexionen von Reflexionen des eigenen Lichts im jeweils anderen Scanner stammen, so dass die Reflexionen klassifiziert werden können und identifiziert werden kann, ob tatsächlich ein anderes Fahrzeug entgegenkommt oder es sich um eine andere Reflexion zum Beispiel, von einem metallenen Regal oder dergleichen, handelt.

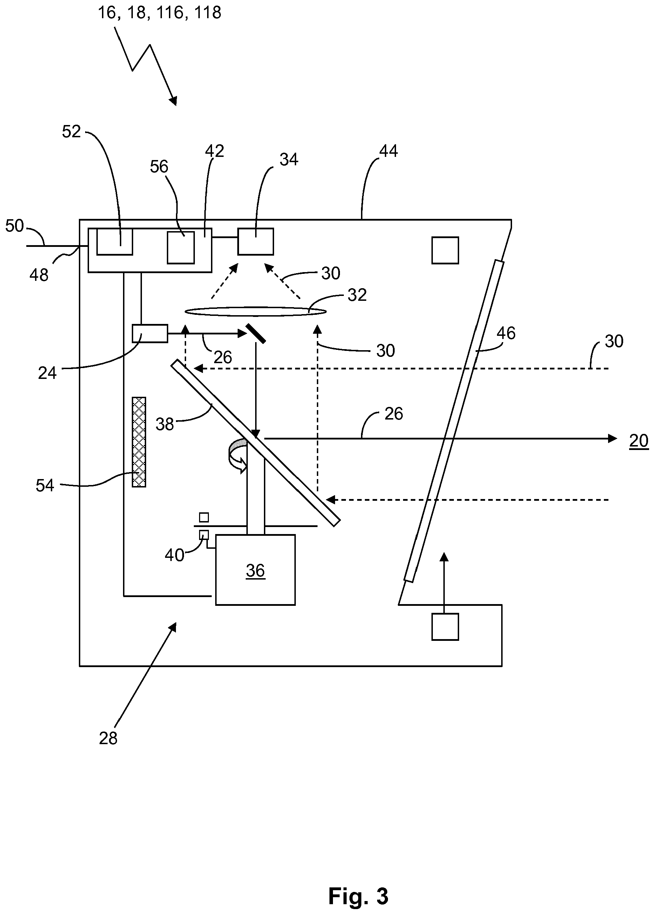

Fig. 3 zeigt schematisch den prinzipiellen Aufbau solcher Sicherheitslaserscanner 116, 118, 16, 18. Ein von einem Laser 24 erzeugter Lichtstrahl 26, der aus einzelnen Lichtimpulsen besteht, wird über eine Lichtablenkeinheit 28 in die Scanebene 20 gelenkt und dort von einem gegebenenfalls vorhandenen Gegenstand remittiert. Das remittierte Licht 30 gelangt wieder zurück zum Laserscanner 16 und wird dort über die Ablenkeinheit 28 und mittels einer Empfangsoptik 32 von einem Empfänger 34 detektiert. Die Lichtablenkeinheit 28 ist in der Regel drehbar ausgestaltet, wobei ein Motor 36 einen Drehspiegel 38 kontinuierlich rotiert. Die jeweilige Winkelstellung des Drehspiegels 38 wird über einen Encoder 40 erfasst. Der von dem Laser 24 erzeugte Lichtstrahl 26 überstreicht somit die durch die Rotationsbewegung erzeugte Scanebene 20. Wird ein vom Empfänger 34 empfangenes reflektiertes Lichtsignal 30 aus der Scanebene 20 empfangen, so kann aus der Winkelstellung der Ablenkeinheit 28 auf die Winkellage des Gegenstandes in der Scanebene 20 geschlossen werden. Zusätzlich wird die Laufzeit der einzelnen Laserlichtpulse des Sendelichts 26 vom Aussenden bis zum Empfang einer Reflexion an dem Gegenstand überwacht und aus der Lichtlaufzeit unter Verwendung der Lichtgeschwindigkeit auf die Entfernung des Gegenstandes vom Laserscanner 16 geschlossen. Diese Auswertung erfolgt in einer Auswerteeinheit 42, die dafür mit dem Laser 24, dem Empfänger 34, dem Motor 36 und Encoder 40 verbunden ist.

Alle genannten Funktionskomponenten sind in einem Gehäuse 44 angeordnet, das frontseitig, also im Bereich des Lichtaus- und Lichteintritts, eine Frontscheibe 46 aufweist, die selbstverständlich für die eingesetzte Wellenlänge der Strahlung durchlässig ist. Im rückwärtigen Bereich des Gehäuses 44 ist eine interne Reflektormarke 54 angeordnet, die von dem Laserstrahl 26 periodisch beim Rotieren des Spiegels 38 überstrichen wird. Sie dient dazu, die Funktionsfähigkeit von Laser, Empfänger, Auswerteeinheit regelmäßig zu überprüfen, indem periodisch geprüft wird, ob die Reflektormarke 54 auch erkannt wird und in der richtigen Entfernung erkannt wird. Die Reflektormarke 54 kann verschieden reflektierende Bereiche aufweisen, um auch die Dynamik des Empfängers 34 prüfen zu können.

In der Auswerteeinheit 42 werden alle Daten verarbeitet, um letztendlich ein Sicherheitssignal an einem Ausgang 48 auf einer Leitung 50 bereitstellen zu können.

Über die Winkel- und Entfernungsdaten berechnet die Auswerteeinheit 42 den Ort eines Gegenstandes in der Scanebene 20, so dass auf diese Weise zweidimensionale Schutzfelder in der Scanebene 20 des Scanners 16 vollständig daraufhin überwacht werden können, ob sich ein unzulässiger Gegenstand in dem Schutzbereich befindet oder das Schutzfeld frei ist. Abhängig vom Sicherheitssignal an dem Ausgang 48 des Laserscanners 16 kann somit letztendlich zum Beispiel ein Not-Halt, eine Notbremsung und/oder ein Ausweichmanöver herbeigeführt werden.

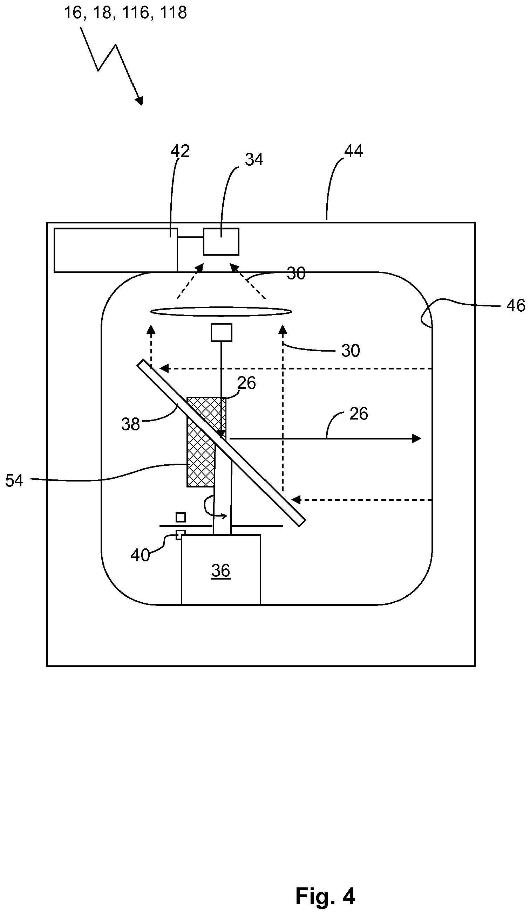

Weiter weist die Auswerteeinheit 42 eine Erkennungseinheit 52 auf, die die von den Reflexionen in der Scanebene 20 abhängigen Empfangssignale des Empfängers 42 daraufhin auswerten kann, ob die erfassten Reflexionen von einem in der Scanebene 20 befindlichen Scanner (in der Fig. 2 wäre das der Scanner 18) stammen. Dies ist deshalb möglich, weil das Sendelicht 26 des ersten Scanners 16 durch die Frontscheibe des baugleichen zweiten Scanners 18 hindurch in das Innere des Gehäuses 44 des zweiten Scanners 18 gelangt und beim Scannen auf Höhe der Scanebene 20 das Innere ausleuchtet. Die dort angeordneten Komponenten reflektieren den Lichtstrahl, so dass der Scanner 16 ein charakteristisches Reflexionsprofil empfängt. Bei den Komponenten des Scanners 18, die von dem Lichtstrahl des Scanners 16 getroffen werden, handelt es sich typischerweise um Leiterplatten, Gehäuseteile, optische und elektronische Komponenten, den Spiegel 38 und die Reflektormarke 54. Je nach Drehstellung des Spiegels 38 werden aber bestimmte Komponenten sichtbar und andere verdeckt, z.B. die im hinteren Gehäuseteil und aus Sicht von der Frontscheibe her hinter dem Spiegel 38 angeordnete Reflektormarke 54, die nur dann sichtbar ist, wenn der Spiegel 38 seine Seite zeigt. Dies ist zur Verdeutlichung in den Fig. 4 gezeigt, die eine schematische Ansicht des Scanners durch die Frontscheibe hindurch zeigt, wie es der Lichtstrahl 26 "sehen" würde. Die Winkelstellung des Spiegels 38 ist hier so, dass die Reflektormarke 54 sichtbar ist.

In Summe gibt es also verschiedene charakteristische Reflexionsprofile für den Scanner 18 je nach Winkelstellung von dessen Drehspielgel 38.

Diese typischen Reflexionsprofile des zweiten Scanners 18 sollten in einem Einlernvorgang, der schon bei der Herstellung der Scanner erfolgen kann, eingelernt werden und in einem Speicher 56 gespeichert werden. Dann kann der erste Scanner 16 die typische charakteristische Reflexion eines anderen Scanners in seiner Scanebene 20 wiedererkennen.

## Patentansprüche

1. Sicherheitssystem zur Absicherung der Umgebung wenigstens eines Objekts (112, 114, 12, 14), wobei das Sicherheitssystem einen ersten Sicherheitslaserscanner (116, 16), dem ein erstes definiertes Referenzziel zugeordnet ist und einen zweiten Sicherheitslaserscanner (118, 18), dem ein zweites definiertes Referenzziel zugeordnet ist aufweist, wobei ein Sicherheitslaserscanner aufweist:
- einen Lichtsender (24),
- eine Lichtablenkeinheit (28) zur periodischen Ablenkung des Lichtes in eine Scanebene,
- einen Empfänger (34) zur Bereitstellung von Empfangssignalen in Abhängigkeit von an im Sichtbereich des Scanners vorhandenen Gegenständen remittiertem Licht
- und eine Auswerteeinheit (42) zur Auswertung der Empfangssignale bezüglich Winkel und Abstand des Gegenstands und zur Bereitstellung eines Sicherheitssignals,
**dadurch gekennzeichnet,**
**dass** die Scanebenen (120, 20) beider Scanner (116, 118, 16, 18) koplanar sind und der erste Scanner (16, 116 bzw. 18, 118) das zweite Referenzziel bildet und der zweite Scanner (118, 18 bzw. 116, 16) das erste Referenzziel.

2. System nach einem der vorhergehenden Ansprüche, **dadurch gekennzeichnet, dass** der Lichtsender gepulstes Licht aussendet und die Entfernung zum Gegenstand über die Pulslaufzeit berechnet wird.

3. System nach einem der vorhergehenden Ansprüche, **dadurch gekennzeichnet, dass** die Auswerteeinheit eine Scannererkennungseinheit umfasst, mit der jeder Scanner aus seinen Empfangssignalen erkennen kann, welche der erfassten Reflexionen von Reflexionen des eigenen Lichts im jeweils anderen Scanner stammen.

4. System nach einem der vorhergehenden Ansprüche, **dadurch gekennzeichnet, dass** eine typische Reflexion des zweiten Scanners von Licht des ersten Scanners und umgekehrt in einem Einlernvorgang eingelernt wird.

5. System nach Anspruch 4, **dadurch gekennzeichnet, dass** die Auswerteeinheit eine Sichttrübungserkennungseinheit aufweist.

6. System nach einem der vorhergehenden Ansprüche, **dadurch gekennzeichnet, dass** jeder Scanner eine interne Reflektormarke aufweist.

7. System nach einem der vorhergehenden Ansprüche, **dadurch gekennzeichnet, dass** das Objekt ein Fahrzeug ist, insbesondere ein fahrerloses Transportsystem, an dem der erste Scanner angeordnet ist, und dass der zweite Scanner an einem zweiten Fahrzeug angeordnet ist.

8. Verfahren zur Absicherung der Umgebung eines Objekts mit einem Sicherheitssystem nach einem der vorhergehenden Ansprüche mit einem ersten und einem zweiten Sicherheitslaserscanner mit den Schritten:
- Anordnen jeden Scanners an je einem Objekt jeweils auf gleicher Höhe und in gegenseitiger Sichtweite,
- Ausrichten der Scanner, so dass die Scanebenen koplanar liegen,
wobei jeder Scanner die Schritte durchführt:
- Aussenden und Ablenken eines Lichtstrahls in die Scanebene,
- Empfangen von an im Sichtbereich des Scanners vorhandenen Gegenständen remittiertem Licht und Bereitstellen von Empfangssignalen,
- Auswerten der Empfangssignale zur Bestimmung der Position eines Gegenstands in der Scanebene und in Abhängigkeit davon Bereitstellen eines Sicherheitssignals,
- Erkennen aus den Empfangssignalen, welche der erfassten Reflexionen von Reflexionen des eigenen Lichts im jeweils anderen Scanner stammen.

## Claims

1. Safety system for fail-safe securing the environment of at least one object (112, 114, 12, 14), the safety system comprising a first safety laser scanner (116, 16) associated with a first defined reference target and a second safety laser scanner (118, 18) associated with a second defined reference target, a safety laser scanner comprises:
- a light transmitter (24),
- a light deflection unit (28) for periodically deflecting the light into a scanning plane,
- a receiver (34) for providing reception signals in dependence on light remitted from objects present in the field of view of the scanner,
- and an evaluation unit (42) for evaluating the received signals with respect to angle and distance of the object and for providing a safety signal,
**characterized**
**in that** the scanning planes (120, 20) of both scanners (116, 118, 16, 18) are coplanar and the first scanner (16, 116 and 18, 118 respectively) forms the second reference target and the second scanner (118, 18 and 116, 16 respectively) forms the first reference target.

2. System according to one of the preceding claims, **characterized in that** the light transmitter emits pulsed light and the distance to the object is calculated from the pulse propagation time.

3. System according to one of the preceding claims, **characterized in that** the evaluation unit comprises a scanner recognition unit with which each scanner can recognize from its received signals which of the detected reflections originate from reflections of its own light in the respective other scanner.

4. System according to one of the preceding claims, **characterized in that** a typical reflection of the second scanner is taught in by light of the first scanner and vice versa in a teach-in process.

5. System according to Claim 4, **characterized in that** the evaluation unit has a visual opacity detection unit.

6. System according to one of the preceding claims, **characterized in that** each scanner has an internal reflector mark.

7. System according to one of the preceding claims, **characterized in that** the object is a vehicle, in particular a driverless transport system, on which the first scanner is arranged, and **in that** the second scanner is arranged on a second vehicle.

8. Method for fail-safe securing the environment of an object with a safety system according to one of the preceding claims with a first and a second safety laser scanner comprising the steps:
- placing each scanner at the same height on the respective object and within sight of each other,
- aligning the scanners so that the scanning planes are coplanar,
wherein each scanner performs the steps:
- transmitting and deflecting of a light beam into the scanning plane,
- receiving remitted light from objects within the scanner's field of view and providing received signals,
- evaluating the received signals to determine the position of an object in the scanning plane and, depending thereon, providing a safety signal,
- recognizing from the received signals which of the recorded reflections originate from reflections of one's own light in the other scanner.

## Revendications

1. Système de sécurité pour sécuriser l'environnement d'au moins un objet (112, 114, 12, 14), le système de sécurité comprenant un premier scanner laser de sécurité (116, 16) associé à une première cible de référence définie et un second scanner laser de sécurité (118, 18) associé à une seconde cible de référence définie, un scanner laser de sécurité comprenant :
- un émetteur de lumière (24),
- une unité de déviation de lumière (28) pour dévier périodiquement la lumière dans un plan de balayage,
- un récepteur (34) pour fournir des signaux de réception en fonction de la lumière réfléchi par des objets présents dans le champ de vision du scanner,
- et une unité d'évaluation (42) pour évaluer les signaux reçus par rapport à l'angle et à la distance de l'objet et pour fournir un signal de sécurité,
**chracterisé**
en ce que les plans de balayage (120, 20) des deux scanners (116, 118, 16, 18) sont coplanaires et le premier scanner (16, 116 et 18, 118 respectivement) forme la deuxième cible de référence et le second scanner (118, 18 et 116, 16 respectivement) forme la première cible de référence.

2. Système selon l'une des revendications précédentes, **caractérisé en ce que** l'émetteur de lumière émet une lumière pulsée et la distance à l'objet est calculée à partir du temps de propagation de l'impulsion.

3. Système selon l'une des revendications précédentes, **caractérisé en ce que** l'unité d'évaluation comprend une unité de reconnaissance de scanner avec laquelle chaque scanner peut reconnaître à partir de ses signaux de réception lesquels des réflexions détectées proviennent de réflexions de sa propre lumière dans l'autre scanner respectif.

4. Système selon l'une des revendications précédentes, **caractérisé en ce qu'**une réflexion typique du second scanner est apprise par la lumière du premier scanner et vice versa dans un processus d'apprentissage.

5. Système selon la revendication 4, **caractérisé en ce que** l'unité d'évaluation comporte une unité de détection d'opacité visuelle.

6. Système selon l'une des revendications précédentes, **caractérisé en ce que** chaque scanner comporte une marque de réflecteur interne.

7. Système selon l'une des revendications précédentes, **caractérisé en ce que** l'objet est un véhicule, en particulier un système de transport sans conducteur, sur lequel est disposé le premier scanner, et **en ce que** le second scanner est disposé sur un second véhicule.

8. Procédé de sécurisation de l'environnement d'un objet par un système de sécurité selon l'une des revendications précédentes avec un premier et un second scanner laser de sécurité comprenant les étapes :
- placer chaque scanner à la même hauteur sur l'objet respectif et à portée de vue l'un de l'autre,
- aligner les scanners de sorte que les plans de balayage soient coplanaires,
dans laquelle chaque scanner exécute les étapes :
- transmettre et dévier d'un faisceau lumineux dans le plan de balayage,
- recevoir la lumière réfléchi par les objets se trouvant dans le champ de vision du scanner et fournir les signaux reçus,
- l'évaluation des signaux reçus pour déterminer la position d'un objet dans le plan de balayage et, en fonction de celui-ci, l'émission d'un signal de sécurité,
- reconnaître à partir des signaux reçus quelles réflexions enregistrées proviennent des réflexions de sa propre lumière dans l'autre scanner.
